# EUROPEAN PATENT SPECIFICATION

(11) **EP 2 560 791 B1**
(45) Date of publication and mention of the grant of the patent: **13.04.2016**
(21) Application number: 11724815.3
(22) Date of filing: 15.04.2011
(51) Int. Cl.: B25B 23/10

(54) **SCREW HEAD AND TOOL FOR USE THEREWITH**
SCHRAUBENKOPF UND WERKZEUG ZUR VERWENDUNG DAMIT
VIS À TÊTE ET OUTIL À UTILISER AVEC CETTE VIS

(30) Priority: 19.04.2010 NO 20100558
(43) Date of publication of application: 27.02.2013
(73) Proprietor: TTapdrive AS, 4637 Kristiansand (NO)
(72) Inventor: EDLAND, Jone, N-0757 Oslo (NO); GOSS, David, C., Rockford, IL 61103 (US)
(74) Representative: Stein, Jan
(86) International application number: PCT/NO2011/000128
(87) International publication number: WO 2011/133043

(56) References cited:
- WO-A1-2007/022293
- WO-A1-2007/123409
- DE-A1-102005 011 734
- US-A1- 2005 098 000

## Description

### Field of the invention

The invention relates to a screw head having a slot in its upper surface with a recess disposed inwardly of the slot, to a tool for use with this screw head, and to a system comprising a screw head and a tool for use therewith.

### Background of the invention

The state of the art includes WO 2007/123409 A1, describing a system for driving a screw. The system comprises a screw and a corresponding tool, where the screw head comprises a hexalobular slot and a sloping transition surface extending downwardly and inwardly with respect to the slot, and a tapered recess extending downwardly from the lower edge of the sloping transition surface. When the screw head is engaged by a tool having upper and lower engagement sections, and where the upper engagement section is tapered downwardly at an angle, and the lower engagement section is tapered downwardly, there is a 'stick fit' between the surface of the tapered recess and the external surface of the lower tapered engagement section, and there is no engagement with the sloping transition surface.

### Summary of the invention

It is therefore provided a system for driving a screw, comprises a screw and a corresponding tool, wherein the screw comprises a screw head having a hexalobular slot in the upper surface of the screw head, an upper peripheral wall of hexalobular planform extending down into the screw head, the upper peripheral wall being parallel or near parallel to the axis of the screw, a sloping transition surface extending downwardly and inwardly with respect to the lower edge of the upper peripheral wall, and a tapered recess extending downwardly from the lower edge of the sloping transition surface. The dimensions of the screw head are such that when the screw head is engaged by the tool, which has upper and lower engagement sections and in which the upper engagement section fits within a recess formed in the hexalobular slot, there is an interference fit between the surface of the tapered recess and the external surface of the lower engagement section, and there is no engagement with the sloping transition surface.

In one embodiment, the upper engagement section comprises a uniform diameter. In one embodiment, the upper engagement section is tapered downwardly at an angle with respect to the axis of the screw.

In one embodiment, in the lower engagement section of the tool, the tool is tapered at the same angle as the recess in the screw, so that the tool makes an interference fit press connection with the screw.

There is a transition zone between the upper and lower engagement sections of the tool in which the tool makes no contact with the screw. In one embodiment, in the upper engagement section of the tool, the tool is tapered at a sharper angle than the peripheral wall of the screw.

In one embodiment, there is a closer fit at the upper edge of the upper peripheral wall than a fit at the lower edge of the upper peripheral wall with the upper engagement section.

The external surface of the lower engagement section has a shape which substantially matches any of a plurality of angular inclinations the surface of the tapered recess may have where the interference fit occurs between the external surface of the lower engagement section and the surface of the tapered recess.

Within an axial cross-section of the tool, the external surface of the lower engagement portion preferably has a first curved portion where the interference fit occurs between the external surface of the lower engagement section and the surface of the tapered recess.

It is also provided a tool for driving a screw having a hexalobular-shaped first recess extending into a screw head and a second recess at the bottom of the first recess, the tool comprising: an upper engagement section configured to fit within the first recess; and a lower engagement section connected to the upper engagement section via a surface extending from the lower engagement section to the upper engagement section; wherein the lower engagement section is tapered downwardly.

In one embodiment, the second recess comprises a circular cross section and the lower engagement section comprises a circular cross section.

In one embodiment, the upper engagement section is tapered downwardly at an angle with respect to the axis of the screw.

It is also provided a screw, comprising screw head; a hexalobular-shaped first recess extending into the screw head; and a second recess centrally located at the bottom of the first recess; wherein the second recess comprises inclined walls, and a bottom of the second recess has a diameter smaller than that of an upper part of the second recess.

In one embodiment, the second recess comprises a circular shape. In one embodiment, a downward transition surface is formed between the upper part of the second recess and walls of the first recess. In one embodiment, the transition surface is parallel with respect to an axis of the screw. In one embodiment, the transition surface is angled with respect to an axis of the screw. In one embodiment, a downward transition surface is formed between the upper part of the second recess and walls of the first recess.

It is also provided a tool for engaging a screw; the screw having a hexalobular slot in the upper surface of a screw head and an upper peripheral wall of hexalobular planform extending down into the screw head, the upper peripheral wall being substantially parallel to the axis of the screw; a sloping transition surface extending downwardly and inwardly with respect to the lower edge of the upper peripheral wall; and a tapered recess extending downwardly from the lower edge of the sloping transition surface, the tool comprising an upper engagement section which fits within a recess formed in the hexalobular slot; and a lower engagement section; wherein the dimensions of the tool are such that when the screw head is engaged by the tool with the upper engagement section within the recess, there is an interference fit between the surface of the tapered recess and the external surface of the lower engagement section and there is no engagement with the sloping transition surface.

In one embodiment, the upper engagement section comprises a uniform diameter. In one embodiment, the upper engagement section is tapered downwardly at an angle with respect to the axis of the screw.

In one embodiment, in the lower engagement section of the tool, the tool is tapered at the same angle as the recess in the screw, so that the tool makes an interference fit press connection with the screw. Preferably, there is a transition zone between the upper and lower engagement sections of the tool in which the tool makes no contact with the screw.

In one embodiment, there is a closer fit at the upper edge of the upper peripheral wall than a fit at the lower edge of the upper peripheral wall with the upper engagement section.

It is also provided a screw for engagement by a tool, the tool having an upper engagement section and a lower engagement section, the screw comprising: a hexalobular slot in the upper surface of the screw head within an upper peripheral wall of hexalobular planform extending down into the screw head, the upper peripheral wall being substantially parallel to the axis of the screw, wherein a recess formed in the hexalobular slot is configured to receive the upper engagement section of the tool; a sloping transition surface extending downwardly and inwardly with respect to the lower edge of the upper peripheral wall; and a tapered recess extending downwardly from the lower edge of the sloping transition surface; wherein the dimensions of the screw head are such that when the screw head is engaged by the tool with the upper engagement section of the tool within the recess formed in the hexalobular slot, there is an interference fit between the surface of the tapered recess and the external surface of the lower engagement section, and there is no engagement with the sloping transition surface.

In one embodiment, the tapered recess is tapered at the same angle as the lower engagement section of the tool, so that the tool makes an interference fit press connection with the screw.

In one embodiment, the dimensions of the screw head are such that, when the tool is engaged to the screw, a transition zone of the tool between its upper and lower engagement sections makes no contact with the screw.

In one embodiment, the peripheral wall of the screw extends at a smaller angle than the upper engagement section of the tool. The tapered recess may be of a circular planform.

In one embodiment, when the tool is engaged to the screw, there is a closer fit at the upper edge of the upper peripheral wall than a fit at the lower edge of the upper peripheral wall with the upper engagement section. The tapered recess is preferably of a circular planform.

It is also provided a system for driving a screw, comprising a screw and a corresponding tool, wherein the screw includes a screw head comprising: a slot in the upper surface of the screw head, a tapered recess disposed downwardly of the slot in the screw, and wherein the tool comprises: an upper engagement section which fits within the slot, and a lower engagement section shaped to extend into the tapered recess with a contact surface of an external surface of the lower engagement section in an interference fit with the tapered recess when the upper engagement section is disposed within the slot, the contact surface having a shape which substantially matches any of a plurality of angular inclinations the surface of the tapered recess may have at the interference fit.

In one embodiment, within an axial cross-section of the tool, the contact surface includes a first curved portion. The first curved portion may have a substantially constant radius of curvature, or may have a varying radius of curvature.

In one embodiment, the slot has a hexalobular shape, and the upper engagement section of the tool has a hexalobular shape. In one embodiment, within an axial cross-section of the screw, the tapered recess has a curved portion that abuts the contact portion of the lower engagement section of the tool at the interference fit.

It is furthermore provided a tool for engaging a screw; the screw having a slot in the upper surface of a screw head and a tapered recess disposed downwardly of the slot, the tool comprising: an upper engagement section designed to fit within the slot, and a lower engagement section shaped to extend into the tapered recess with a contact surface of an external surface of the lower engagement section in an interference fit with the tapered recess when the upper engagement section is disposed within the slot, wherein within an axial cross-section of the tool, the contact surface includes a first curved portion.

In one embodiment, the upper engagement section of the tool has a hexalobular shape. The first curved portion may have a substantially constant radius of curvature, or may have a varying radius of curvature.

It is also provided a screw for engagement by a tool, the tool having an upper engagement section and a lower engagement section, the screw comprising a slot in the upper surface of the screw head within an upper peripheral wall extending down into the screw head, wherein the slot is shaped to receive the upper engagement section of the tool; and a tapered recess disposed downwardly of the slot, wherein within an axial cross-section of the screw, the tapered recess has a curved portion; wherein the dimensions of the screw head are such that when the screw head is engaged by the tool with the upper engagement section of the tool within the slot, there is an interference fit between the curved portion of the surface of the tapered recess and the external surface of the lower engagement section.

In one embodiment, the slot has a hexalobular shape. In one embodiment, the screw head further includes a sloping transition surface extending downwardly and inwardly with respect to the lower edge of the upper peripheral wall toward the tapered recess, and the dimensions of the screw head are such that when the screw head is engaged by the tool with an interference fit between the surface of the tapered recess and the external surface of the lower engagement section, there is no engagement of the tool with the sloping transition surface.

There is provided a screw head having a hexalobular slot in the upper surface of the screw head, an upper peripheral wall of hexalobular planform extending down into the screw head, the upper peripheral wall being parallel or near parallel to the axis of the screw, a sloping transition surface extending downwardly and inwardly with respect to the lower edge of the upper peripheral wall, and a tapered recess extending downwardly from the lower edge of the sloping transition surface, in which the dimensions of the screw head are such that when the screw head is engaged by a tool having upper and lower engagement sections, there is a 'stick fit' (i.e., an interference fit) between the surface of the tapered recess and the external surface of the lower engagement section, and there is no engagement with the sloping transition surface.

The invention provides a tool for use with a screw head having a hexalobular slot in its upper surface, and in which the tool has upper and lower engagement sections, and the lower engagement section is of smaller diameter is and tapered downwardly with respect to the axis of the screw to which the tool is to engage, and in which the upper and lower engagement sections are connected with a transition surface which is tapered with a large angle with respect to the axis of the screw.

The upper engagement section may be tapered downwardly at an angle or may be straight with respect to the axis of a screw to which the tool is to engage. The upper engagement section may be tapered at an angle of 0.1 to 5 degrees, or at an angle of between 1 and 2 degrees.

In one embodiment, in an upper engagement section of the tool, the tool is tapered at a sharper angle than a peripheral wall of the screw.

### Brief description of the drawings

These and other characteristics of the invention will be clear from the following description of preferential forms of embodiments, given as non-restrictive examples, with reference to the accompanying drawings, in which:-
Figure 1 is a cross section of one embodiment of a driving tool,
Figure 2 is a cross section of the tool of Fig. 1 engaging the head of a screw,
Figure 3 is a plan view of the screw head showing the configuration of a slot,
Figure 4 is a cross section of another embodiment of a driving tool,
Figure 5 is a cross section of the tool of Fig. 4 engaging the head of a screw,
Figure 6 is a cross section of another embodiment of a driving tool,
Figure 7 is a cross section of the tool of Fig. 6 engaging the head of a screw,
Figure 8 shows a central point of another embodiment of a driving tool engaged in a tapered recess of the head of a screw,
Figure 9 shows a central point of another embodiment of a driving tool engaged in a tapered recess of the head of a screw, and
Figure 10 is a cross section of another embodiment of a driving tool engaging another embodiment of a screw.

### Description of preferential embodiments

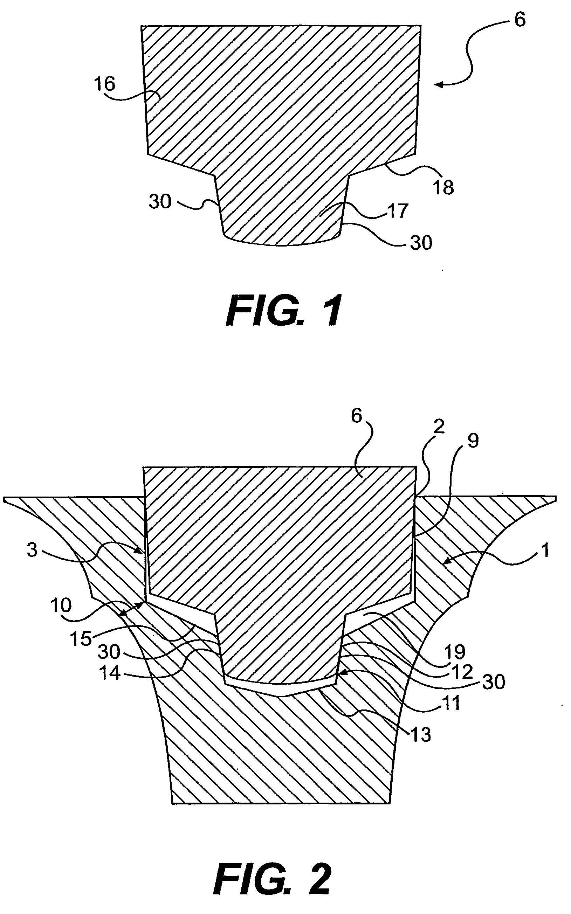

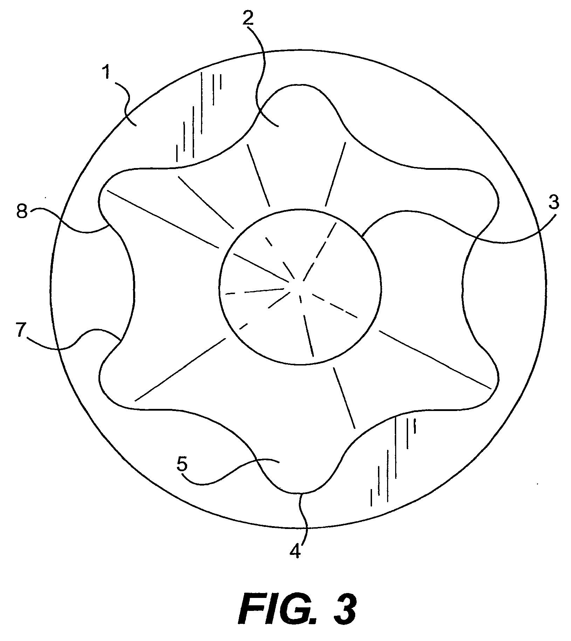

As shown in Figures 2, 5, 7, and 10, a screw head 1 has a slot 2. The slot 2 is formed as a recess 3 in the screw head, and is shaped as a star with six points 4. The points 4 of the star are rounded, as shown in Figure 3, and the slot 2 is termed a hexalobular slot. As used herein, the terms "rounded" and "round" are not limited to shapes having a constant radius of curvature but refer to any curved shape, including elliptical or other curved shapes. Hexalobular slots are described in ISO 10664, and are an internal driving feature. They may be known as 'teeth recesses' or 'star recesses'. Depending on the direction of rotation, a tool 6 (see Figures 1 -3) will engage surfaces 7 or 8 on one side or the other of each point 4.

Figure 2 shows a cross section through one embodiment of the screw head 1. The recess 3 extends down into the screw head 1. Walls 9 of the recess 3 are approximately straight. The cross section of the recess 3 retains the shape of a star with six points throughout the straight walled part as it extends down into the screw head. The depth of the recess 3 is limited by the minimum allowable wall thickness 10 near the bottom of the recess 3.

As shown in Figures 2, 5, 7, and 10, the slot 2 has a further recess 11 at the bottom of the six pointed recess 3. The recess 11 is aligned with the axis of the screw, and so is centrally located therein. This central recess 11 may have a circular cross section and a smaller diameter than the recess 3. Walls 12 of the recess 11 are slightly inclined, so that the bottom 13 of the recess 11 has a diameter slightly smaller than that of the upper part 14 of the recess 11.

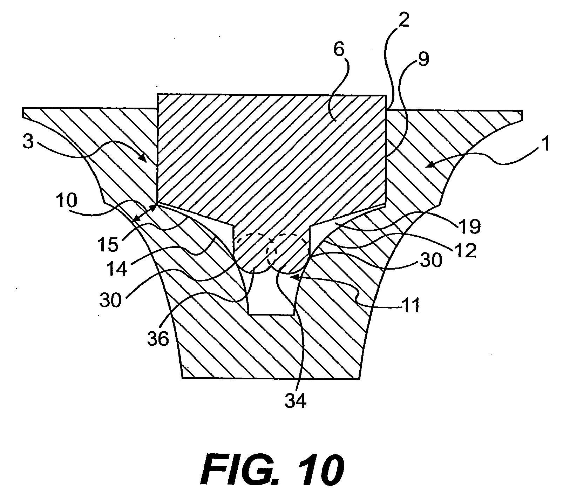

The walls 12 of the recess 11 may have various shapes. For example, within an axial cross-section of the screw head 1, the walls 12 may extend in substantially straight lines, as shown in Figures 2, 5, and 7. As another example, the walls 12 may extend at different angles at different points along the axis of the screw head 1, as shown in Figure 10. In some such cases, the walls 12 may have a convex shape and extend away from the axis of the screw head 1 as they extend upwardly. For example, as Figure 10 shows, the walls 12 may include one or more curved portions that extend away from the axis of the screw head 1 as they extend upward. In embodiments where the walls 12 include on or more curved portions, those portions may have a constant or varying radius of curvature.

The configuration of the walls 12 of the tapered recess 11 is not limited to the examples provided in the Figures. For instance, as an alternative to one or more curved, convex portions extending away from the axis of the screw head as they extend upward, the walls 12 of the tapered recess 11 may include one or more polygonal portions that extend at an increasing angle to the axis of the screw head as they extend upward. Indeed, the walls 12 of the tapered recess may have any combination of straight, curved, and/or polygonal portions that allow an interference fit with the tool 6, as discussed in more detail below.

A downwardly straight or sloping transition surface 15 is formed between the upper part 14 of the central recess 11 and the walls 9 of the six-pointed recess 3.

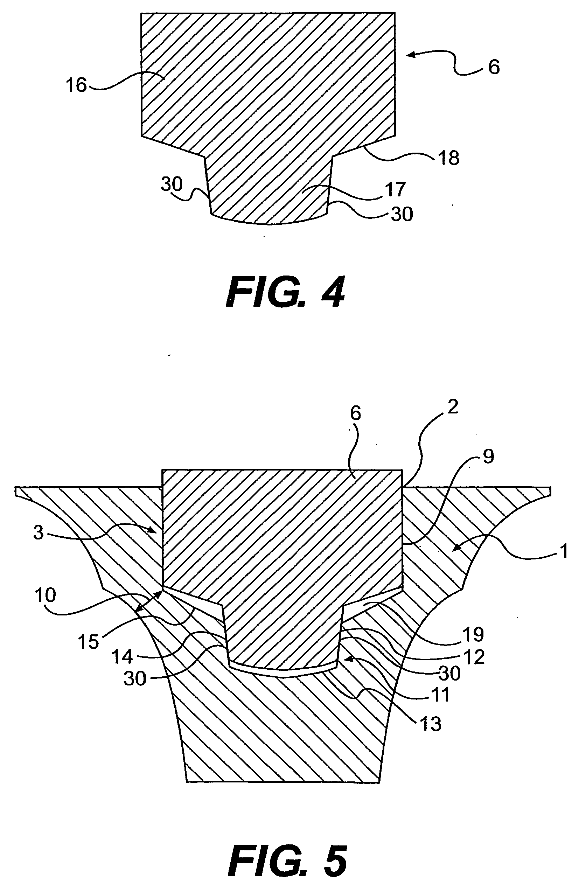

The tool 6 has an engagement section 16 that is designed to fit within the recess 3. The shape of the engagement section 16 in plan complements the shape of the recess 3. The diameter (in cross-section; or circumference) of the engagement section 16 may be uniform (as shown in Figures 4-7) or slightly tapered inwardly towards its lower end (as shown in Figures 1 and 2). The taper may typically be 1.5 degrees. The diameter of the engagement section 16 is sized to allow it to be inserted into the recess 3 without difficulties.

The tool 6 also has a central point, or lower engagement section, 17, which may have a circular cross section. A surface 18 on the tool 6 extends outwardly and upwardly from the central point 17 to the engagement section 16. The angle of inclination of the surface 18 is smaller than that of the transition surface 15. Thus a space 19 is formed between the surfaces 15 and 18 when a tool 6 is inserted into the slot 2. The depth of the space 19 diverges towards the central point 17. The section 16 of the tool 6 may engage the upper periphery of the walls 9 of the recess 3 when the tool enters the slot 2.

Furthermore, in the case of screws which have undergone surface treatment, the diverging space 19 allows any excess coating to collect in the space 19 without obstructing the engagement between the tool and the slot. If no space had been provided, coating residue might settle on the surface 15 and at the bottom 13 of the recess 11, and thereby prevent sufficient engagement between the tool 6 and the slot 2.

Press engagement between the central point 17 and the recess 11, supported by the engagement section 16 of the tool and the upper periphery of the wall 9, ensures that - due to friction - the screw can remain (i.e. 'stick fit') on the tool without falling off. This mode of engagement is particularly effective in reducing angular movement between the tool 6 and the screw head 1. Retention of the screw on the tool by press engagement is particularly useful on one handed power tools and for robotic tools.

To provide an interference fit between the central point 17 and the tapered recess 11, one or more portions of the central point 17 may have a cross-sectional dimension wider than the narrowest portion of the tapered recess 11 and narrower than the widest portion of the tapered recess 11. As a result, one or more contact surfaces 30 of an external surface of central point 17 may provide an interference fit with the tapered recess 11 where the contact surface 30 presses against the surface of the tapered recess 11. The contact surfaces 30 of the central point 17 may have various shapes. For example, as Figures 1, 2, 4, and 5 show, within an axial cross-section of central point 17, contact surfaces 30 may have straight sides, which may taper toward one another as they extend downward. In some embodiments, these straight sides may have substantially the same taper as the surface of the tapered recess 11.

Alternatively, different portions of the contact surfaces 30 may extend at different angles relative to the axis of the tool 6 and the screw head 1. For example, as

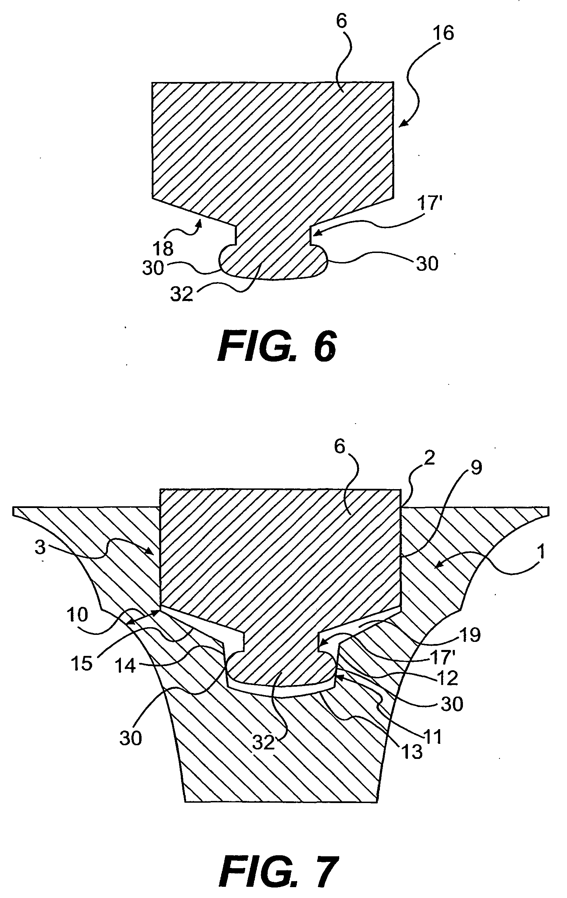

Figures 6-9 show, the contact surfaces 30 may include one or more curved portions within an axial cross-section of the central point 17. The one or more curved portions of each contact surface 30 may have a convex shape that extends at an increasingly greater angle to the axis of the tool and the screw head as it extends downwardly. For instance, contact surfaces 30 may include convex curved portions that curve toward the axis of the tool 6 and the screw head 11 as they extend downward.

Configuring the contact surfaces 30 and/or the walls 12 of the tapered recess 11 with a shape having different angles at different axial points, such as a curved surface, may allow the contact surfaces 30 to substantially match any of a plurality of angles that the surface of the tapered recess 11 may have at the point of the interference fit. Indeed, configuring the contact surfaces 30 and/or the walls 12 of the tapered recess 11 with a curved cross-section may allow the contact surfaces 30 to automatically substantially match whatever angle the corresponding portion of the surface of the tapered recess 11 may have at the point of interference fit between the contact surfaces 30 and the surface of the tapered recess 11. With the contact surfaces 30 and/or the walls 12 of the tapered recess 11 having convex, curved shapes, contact between the contact surfaces 30 and the walls 12 of the tapered recess 11 will automatically occur wherever the two surfaces are tangent to one another. Thus, at the point of the interference fit, the contact surfaces 30 will extend parallel to the abutting portion of the walls 12 of the tapered recess 11, regardless of the angle of the contact surfaces 30 or the walls 12.

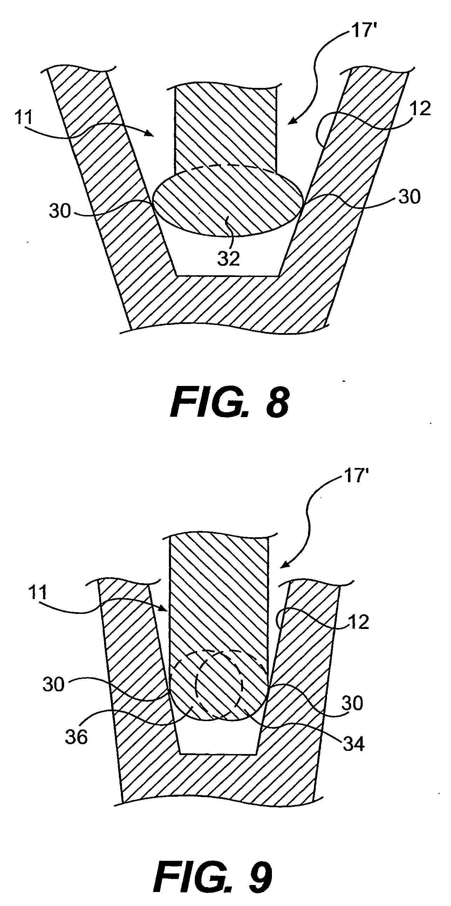

Embodiments of the tool 6 where the contact surface 30 includes one or more curved portions may have various forms. As shown in Figures 6-8, the central point 17 may include a single, curved bulb 32 with curved contact surfaces 30 on each side. As another example, Figures 9 and show that the central point 17 may include multiple curved bulbs 34, 36, each defining curved contact surfaces 30. A curved portion of a contact surface 30 may have a substantially constant radius of curvature, as shown in Figure 9, or it may have a varying radius of curvature, as shown in Fig. 8. Indeed, curved portions of contact surfaces 30 may include one or more circular shapes, elliptical shapes, or segments of such shapes. The remainder of the central point 17 may have any shape, including, but not limited to, tapered, non-tapered, and/or non-circular (in its cross-section perpendicular to the central axis of tool 6).

The configuration of the central point 17 and the contact surfaces 30 are not limited to the examples provided in the Figures. The central point 17 and the surfaces thereof, including the contact surfaces 30, may be smooth, uneven (rough), fluted (grooved), and/or any other shape and/or textures. The contact surfaces 30 may have any arrangement of shapes that allow it to engage with the surface of the tapered recess 11. For instance, as an alternative to a curved portion, a contact surface 30 may have a portion with a polygonal cross-section that extends toward the axis of the tool 6 as it extends downwardly. Similar to a curved portion, such a polygonal portion may allow the contact surface to match any of a plurality of different angles that the surface of the tapered recess 11 may have at the point of the interference fit. Furthermore, in the case of straight-side contact surfaces 30, the contact surfaces 30 may extend at angle(s) different from the angle of the surface of the tapered recess 11.

Additionally, a system according to the present disclosure may employ different combinations of shapes of the contact surfaces 30 of the central point 17 and the walls 12 of the tapered recess 11 than shown in the Figures. For example, a system according to the present disclosure may employ a central point 17 with contact surfaces 30 that are substantially straight with walls 12 of the tapered recess 11 that include curved and/or polygonal portions.

The central point 17 may have a length shorter than the height of the recess 3, to enable the engagement section 16 of the tool 6 to enter the recess 3.

The formation of a conical press connection between the tool 6 and the screw head 1 enables the screw to remain on the tool, and not fall off. Force fit of the tool 6 onto the screw head 1 keeps the screw head on the tool. The material of the tool 6 is harder than the material of the screw head 1, and this enables the force fit connection to take place.

Additionally, configuring the contact surfaces 30 and/or the walls 12 of the tapered recess 11 with a cross-section that has different angles at different axial positions, such as with one or more curved portions, may provide a cost-effective way to ensure secure engagement of the tool 6 to the screw head 1. By allowing the contact surfaces 30 to automatically match the angle of the tapered recess 11 at the point of the interference fit, such a configuration may ensure desirably high friction between the contact surfaces 30 of the central point 17 and the walls 12 of the tapered recess 11. This result may occur because surfaces extending at substantially the same angle where they abut may tend to produce greater friction than surfaces extending at significantly different angles where they abut. This may promote good adherence of the screw head 1 to the tool 6. Because the disclosed embodiments enable this result for a variety of angles that the contact surfaces 30 of the central point 17 and/or the walls 12 of the tapered recess 11 may have, they reduce the need to hold tight manufacturing tolerances on the shapes of these surfaces.

Additionally, configuring the contact surfaces 30 with one or more convex portions that extend at increasingly greater angles to the axis of the tool 6 as they extend downward may tend to reduce variability in the depth of engagement of the central point 17 in the tapered recess 11. Configuring the walls 12 of the tapered recess 11 with one or more convex portions that extend away from the central axis of the screw head 1 as they extend upward may also promote this result. This may help ensure that the tool 6 properly engages the screw head 1 to allow robust transfer of torque between the tool 6 and the screw head 1.

## Claims

1. A tool (6) for engaging a screw head (1) having a slot (2) in an upper surface and a tapered recess (11) disposed downwardly of the slot, the tool (6) comprising an upper engagement section (16) designed to fit within the slot (2), and a lower engagement section (17) shaped to extend into the tapered recess (11) with a contact surface (30) of an external surface of the lower engagement section in an interference fit with at least a portion of the wall (12) of the tapered recess when the upper engagement section is disposed within the slot, **characterized in that**, within an axial cross-section of the tool, the contact surface (30) comprises a first curved portion.

2. The tool of claim 1, wherein the upper engagement section (16) comprises a hexalobular cross-sectional shape.

3. The tool of claim 1 or claim 2, wherein the first curved portion has a substantially constant radius of curvature, or a varying radius of curvature.

4. The tool of any one of claims 2 - 3, further comprising an upper peripheral wall of hexalobular planform extending down into the screw head, the upper peripheral wall being substantially parallel to the axis of the screw; a sloping transition surface extending downwardly and inwardly with respect to the lower edge of the upper peripheral wall; and said tapered recess (11) extending downwardly from the lower edge of the sloping transition surface, the tool comprising said upper engagement section (16) which fits within a recess formed in the hexalobular slot and said lower engagement section (17), wherein the dimensions of the tool are such that when the screw head is engaged by the tool with the upper engagement section within the recess, there is an interference fit between the surface of the tapered recess and the external surface of the lower engagement section and there is no engagement with the sloping transition surface.

5. The tool of any one of claims 1 - 4, in which in the lower engagement section (17) of the tool, the tool is tapered at the same angle as the recess in the screw, so that the tool makes an interference fit press connection with the screw.

6. The tool of any one of claims 1 - 5, wherein the lower engagement section (17) is connected to the upper engagement section (16) via a surface (18) extending outwardly and upwardly from the lower engagement section to the upper engagement section; wherein the lower engagement section is tapered downwardly.

7. The tool of any one of claim 1 - 6, wherein the tapered recess (11) comprises a circular cross section and the lower engagement section (17) comprises a circular cross section.

8. A screw for engagement by a tool (6) having an upper engagement section (16) and a lower engagement section (17), the screw comprising a screw head (1) having a slot (2) in an upper surface within an upper peripheral wall extending down into the screw head (1), wherein the slot (2) is shaped to receive the upper engagement section (16); and a tapered recess (11) disposed downwardly of the slot, **characterized in that,** within an axial cross-section of the screw, the tapered recess (11) has a curved portion; wherein the dimensions of the screw head are such that when the screw head is engaged by the tool with the upper engagement section of the tool within the slot, there is an interference fit between the curved portion of the surface of the tapered recess and the external surface of the lower engagement section.

9. The screw of claim 8, wherein the slot (2) has a hexalobular shape.

10. The screw of claim 8 or claim 9, wherein the screw head further comprises a sloping transition surface extending downwardly and inwardly with respect to the lower edge of the upper peripheral wall toward the tapered recess, and the dimensions of the screw head are such that when the screw head is engaged by the tool with an interference fit between the surface of the tapered recess and the external surface of the lower engagement section, there is no engagement of the tool with the sloping transition surface.

11. The screw of any one of claims 8 - 10, wherein the tapered recess is tapered at the same angle as the lower engagement section of the tool, so that the tool makes an interference fit press connection with the screw.

12. The screw of any one of claims 8 - 11, wherein the dimensions of the screw head are such that, when the tool is engaged to the screw, a transition zone of the tool between its upper and lower engagement sections makes no contact with the screw.

13. The screw of any one of claims 8 - 12, wherein the tapered recess is of circular planform.

14. A system for driving a screw, comprising a screw according to any one of claims 8 - 13 and a corresponding tool (6) according to any one of claims 1-7,
- wherein the screw comprises a screw head (1) having a slot (2) in an upper surface, and a tapered recess (11) disposed downwardly of the slot (2), and
- wherein the tool (6) comprises an upper engagement section (16) which fits within the slot (2),
the system being **characterized in that**
the tool comprises a lower engagement section (17) shaped to extend into the tapered recess (11) with a contact surface (30) of an external surface of the lower engagement section in an interference fit with the tapered recess when the upper engagement section (16) is disposed within the slot (2), the contact surface (30) having a shape which substantially matches any of a plurality of angular inclinations the surface of the tapered recess may have at the interference fit, and furthermore, within an axial cross-section of the tool, the contact surface comprises a first curved portion (32; 34, 36).

15. The system of claim 14, wherein, within an axial cross-section of the screw, the tapered recess (11) has a curved portion; wherein the dimensions of the screw head are such that when the screw head is engaged by the tool with the upper engagement section of the tool within the slot, there is an interference fit between the curved portion of the surface of the tapered recess and the external surface of the lower engagement section.

## Patentansprüche

1. Werkzeug (6) zum Eingriff in einen Schraubenkopf (1), welcher einen Schlitz (2) in einer oberen Fläche und eine sich verjüngende Aussparung (11) aufweist, die abwärts von dem Schlitz angeordnet ist, wobei das Werkzeug (6) einen oberen Eingriffsabschnitt (16), der ausgelegt ist, in den Schlitz (2) zu passen, und einen unteren Eingriffsabschnitt (17) umfasst, welcher geformt ist, sich in die sich verjüngende Aussparung (11) mit einer Kontaktfläche (30) einer äußeren Fläche des unteren Eingriffsabschnitts in einer Presspassung mit zumindest einem Abschnitt der Wand (12) der sich verjüngenden Aussparung zu erstrecken, wenn der obere Eingriffsabschnitt innerhalb des Schlitzes angeordnet ist, **dadurch gekennzeichnet, dass** die Kontaktfläche (30) innerhalb eines axialen Querschnitts des Werkzeugs einen ersten gekrümmten Abschnitt umfasst.

2. Werkzeug nach Anspruch 1, wobei der obere Eingriffsabschnitt (16) eine Hexalobular-Querschnittsform aufweist.

3. Werkzeug nach Anspruch 1 oder Anspruch 2, wobei der erste gekrümmte Abschnitt einen im Wesentlichen konstanten Krümmungsradius oder einen variierenden Krümmungsradius aufweist.

4. Werkzeug nach einem der Ansprüche 2 bis 3, ferner umfassend eine obere Umfangswand mit einer Hexalobular-Querschnittsform, die sich abwärts in den Schraubenkopf erstreckt, wobei die obere Umfangswand im Wesentlichen parallel zu der Achse der Schraube ist; eine schräge Übergangsfläche, die sich abwärts und einwärts bezüglich der unteren Kante der oberen Umfangswand erstreckt; und wobei die sich verjüngende Aussparung (11) sich abwärts von der unteren Kante der schrägen Übergangsfläche erstreckt, wobei das Werkzeug den oberen Eingriffsabschnitt (16), welcher in eine Aussparung passt, die in dem Hexalobular-Schlitz gebildet ist, und den unteren Eingriffsabschnitt (17) umfasst, wobei die Abmessungen des Werkzeugs derart sind, dass dann, wenn der Schraubenkopf durch das Werkzeug mit dem oberen Eingriffsabschnitt innerhalb der Aussparung in Eingriff ist, eine Presspassung zwischen der Fläche der sich verjüngenden Aussparung und der äußeren Fläche des unteren Eingriffsabschnitts vorhanden ist und kein Eingriff mit der schrägen Übergangsfläche vorhanden ist.

5. Werkzeug nach einem der Ansprüche 1 bis 4, in welchem in dem unteren Eingriffsabschnitt (17) des Werkzeugs das Werkzeug in dem gleichen Winkel wie die Aussparung in der Schraube verjüngt ist, so dass das Werkzeug eine Presspassungsverbindung mit der Schraube ausführt.

6. Werkzeug nach einem der Ansprüche 1 bis 5, wobei der untere Eingriffsabschnitt (17) mit dem oberen Eingriffsabschnitt (16) über eine Fläche (18) verbunden ist, die sich nach außen und aufwärts von dem unteren Eingriffsabschnitt zu dem oberen Eingriffsabschnitt erstreckt; wobei der untere Eingriffsabschnitt nach unten verjüngt ist.

7. Werkzeug nach einem der Ansprüche 1 bis 6, wobei die sich verjüngende Aussparung (11) einen kreisförmigen Querschnitt umfasst und der untere Eingriffsabschnitt (17) einen kreisförmigen Querschnitt umfasst.

8. Schraube zum Eingriff durch ein Werkzeug (6), welches einen oberen Eingriffsabschnitt (16) und einen unteren Eingriffsabschnitt (17) aufweist, wobei die Schraube einen Schraubenkopf (1), der einen Schlitz (2) in einer oberen Fläche innerhalb einer oberen Umfangswand aufweist, die sich abwärts in den Schraubenkopf (1) erstreckt, wobei der Schlitz (2) geformt ist, den oberen Eingriffsabschnitt (16) aufzunehmen; und eine sich verjüngende Aussparung (11) umfasst, die abwärts von dem Schlitz angeordnet ist, **dadurch gekennzeichnet, dass** innerhalb eines axialen Querschnitts der Schraube die sich verjüngende Aussparung (11) einen gekrümmten Abschnitt aufweist; wobei die Abmessungen des Schraubenkopfes derart sind, dass dann, wenn der Schraubenkopf durch das Werkzeug mit dem oberen Eingriffsabschnitt des Werkzeugs innerhalb des Schlitzes in Eingriff ist, eine Presspassung zwischen dem gekrümmten Abschnitt der Fläche der sich verjüngenden Aussparung und der äußeren Fläche des unteren Eingriffsabschnitts vorhanden ist.

9. Schraube nach Anspruch 8, wobei der Schlitz (2) eine Hexalobular-Form aufweist.

10. Schraube nach Anspruch 8 oder Anspruch 9, wobei der Schraubenkopf ferner eine schräge Übergangsfläche umfasst, die sich abwärts und einwärts bezüglich der unteren Kante der oberen Umfangswand zu der sich verjüngenden Aussparung hin erstreckt, und wobei die Abmessungen des Schraubenkopfes derart sind, dass dann, wenn der Schraubenkopf durch das Werkzeug mit einer Presspassung zwischen der Fläche der sich verjüngenden Aussparung und der äußeren Fläche des unteren Eingriffsabschnitts in Eingriff ist, kein Eingriff des Werkzeugs mit der schrägen Übergangsfläche vorhanden ist.

11. Schraube nach einem der Ansprüche 8 bis 10, wobei die sich verjüngende Aussparung in dem gleichen Winkel wie der untere Eingriffsabschnitt des Werkzeugs verjüngt ist, so dass das Werkzeug eine Presspassungsverbindung mit der Schraube ausführt.

12. Schraube nach einem der Ansprüche 8 bis 11, wobei die Abmessungen des Schraubenkopfes derart sind, dass dann, wenn das Werkzeug mit der Schraube in Eingriff ist, eine Übergangszone des Werkzeugs zwischen seinen oberen und unteren Eingriffsabschnitten keinen Kontakt mit der Schraube hat.

13. Schraube nach einem der Ansprüche 8 bis 12, wobei die sich verjüngende Aussparung von kreisförmiger Querschnittsform ist.

14. System zum Eindrehen einer Schraube, umfassend eine Schraube nach einem der Ansprüche 8 bis 13 und ein entsprechendes Werkzeug (6) nach einem der Ansprüche 1 bis 7,
- wobei die Schraube einen Schraubenkopf (1), der einen Schlitz (2) in einer oberen Fläche aufweist, und eine sich verjüngende Aussparung (11) umfasst, die abwärts von dem Schlitz (2) angeordnet ist, und
- wobei das Werkzeug (6) einen oberen Eingriffsabschnitt (16) umfasst, welcher in den Schlitz (2) passt,
wobei das System **dadurch gekennzeichnet ist, dass**
das Werkzeug einen unteren Eingriffsabschnitt (17) umfasst, welcher geformt ist, sich in die sich verjüngende Aussparung (11) mit einer Kontaktfläche (13) einer äußeren Fläche des unteren Eingriffsabschnitts in einer Presspassung mit der sich verjüngenden Aussparung zu erstrecken, wenn er obere Eingriffsabschnitt (16) innerhalb des Schlitzes (2) angeordnet ist, wobei die Kontaktfläche (30) eine Form aufweist, welche im Wesentlichen zu jedweder einer Mehrzahl von Winkelneigungen passt, welche die Fläche der sich verjüngenden Aussparung bei der Presspassung aufweisen kann, und dass darüber hinaus die Kontaktfläche innerhalb eines axialen Querschnitts des Werkzeugs einen ersten gekrümmten Abschnitt (32; 34, 36) umfasst.

15. System nach Anspruch 14, wobei die sich verjüngende Aussparung (11) innerhalb eines axialen Querschnitts der Schraube einen gekrümmten Abschnitt aufweist; wobei die Abmessungen des Schraubenkopfes derart sind, dass dann, wenn der Schraubenkopf durch das Werkzeug mit dem oberen Eingriffsabschnitt des Werkzeugs innerhalb des Schlitzes in Eingriff ist, eine Presspassung zwischen dem gekrümmten Abschnitt der Fläche der sich verjüngenden Aussparung und der äußeren Fläche des unteren Eingriffsabschnitts vorhanden ist.

## Revendications

1. Outil (6) destiné à venir en prise avec une tête de vis (1) présentant une fente (2) dans une surface supérieure et un renfoncement conique (11) disposé au fond de la fente, l'outil (6) comprenant une section supérieure de prise (16) conçue pour loger dans la fente (2), et une section inférieure de prise (17) constituée pour se prolonger dans le renfoncement conique (11), une surface de contact (30) d'une surface externe de la section inférieure de prise étant en ajustement avec serrage avec au moins une partie de la paroi (12) du renfoncement conique lorsque la section supérieure de prise est disposée à l'intérieur de la fente, **caractérisé en ce que,** dans une section transversale axiale de l'outil, la surface de contact (30) comprend une première partie incurvée.

2. Outil selon la revendication 1, dans lequel la section supérieure de prise (16) comprend une forme transversale hexalobulaire.

3. Outil selon la revendication 1 ou la revendication 2, dans lequel la première partie incurvée présente un rayon de courbure sensiblement constant, ou un rayon de courbure variable.

4. Outil selon l'une quelconque des revendications 2 à 3, comprenant en outre une paroi périphérique supérieure de forme en plan hexalobulaire descendant jusque dans la tête de vis, la paroi périphérique supérieure étant sensiblement parallèle à l'axe de la vis ; une surface de transition en pente descendant vers l'intérieur, par rapport au bord inférieur de la paroi périphérique supérieure ; et ledit renfoncement conique (11) descendant depuis le bord inférieur de la surface de transition en pente, l'outil comprenant ladite section supérieure de prise (16) logeant dans un renfoncement ménagé dans la fente hexalobulaire et ladite section inférieure de prise (17), les dimensions de l'outil étant telles que, lorsque la tête de vis est en prise avec l'outil et que la section supérieure de prise est placée dans le renfoncement, il s'exerce un ajustement avec serrage entre la surface du renfoncement conique et la surface externe de la section inférieure de prise et il ne s'exerce aucune prise avec la surface de transition en pente.

5. Outil selon l'une quelconque des revendications 1 à 4, dans lequel, dans la section inférieure de prise (17) de l'outil, ce dernier présente une conicité selon le même angle que celui du renfoncement ménagé dans la vis, permettant à l'outil d'effectuer un raccord à pression à ajustement avec serrage avec la vis.

6. Outil selon l'une quelconque des revendications 1 à 5, dans lequel la section inférieure de prise (17) est reliée à la section supérieure de prise (16) par l'intermédiaire d'une surface (18) ressortant vers le haut à partir de la section inférieure de prise vers la section supérieure de prise, la section inférieure de prise présentant une conicité dirigée vers le bas.

7. Outil selon l'une quelconque des revendications 1 à 6, dans lequel le renfoncement conique (11) présente une section transversale circulaire et la section inférieure de prise (17) présente une section transversale circulaire.

8. Vis destinée à venir en prise avec un outil (6) présentant une section supérieure de prise (16) et une section inférieure de prise (17), la vis comprenant une tête de vis (1) présentant une fente (2) dans une surface supérieure au sein d'une paroi périphérique supérieure descendant dans la tête de vis (1), la fente (2) étant constituée pour recevoir la section supérieure de prise (16) ; et un renfoncement conique (11) disposé au fond de la fente, **caractérisée en ce que,** dans une section transversale axiale de la vis, le renfoncement conique (11) présente une partie incurvée, les dimensions de la tête de vis étant telles que lorsque la tête de vis est en prise avec l'outil et que la section supérieure de prise de l'outil est placée dans la fente, il s'exerce un ajustement avec serrage entre la partie incurvée de la surface du renfoncement conique et la surface externe de la section inférieure de prise.

9. Vis selon la revendication 8, dans laquelle la fente (2) présente une forme hexalobulaire.

10. Vis selon la revendication 8 ou la revendication 9, dans laquelle la tête de vis comprend en outre une surface de transition en pente descendant vers l'intérieur par rapport au bord inférieur de la paroi périphérique supérieure vers le renfoncement conique, et les dimensions de la tête de vis sont telles que lorsque la tête de vis est en prise avec l'outil, un ajustement avec serrage s'exerçant entre la surface du renfoncement conique et la surface externe de la section inférieure de prise, il ne s'exerce aucune prise entre l'outil et la surface de transition en pente.

11. Vis selon l'une quelconque des revendications 8 à 10, dans laquelle le renfoncement conique présente une conicité selon le même angle que celui de la section inférieure de prise de l'outil, permettant à l'outil d'effectuer un raccord à pression à ajustement avec serrage avec la vis.

12. Vis selon l'une quelconque des revendications 8 à 11, dans laquelle les dimensions de la tête de vis sont telles que, lorsque l'outil est en prise avec la vis, il ne s'exerce aucun contact entre une zone de transition de l'outil située entre les sections supérieure et inférieure de prise et la vis.

13. Vis selon l'une quelconque des revendications 8 à 12, dans laquelle le renfoncement conique est de forme en plan circulaire.

14. Système permettant de tourner une vis, comprenant une vis selon l'une quelconque des revendications 8 à 13 et un outil (6) correspondant selon l'une quelconque des revendications 1 à 7,
- dans lequel la vis comprend une tête de vis (1) présentant une fente (2) dans une surface supérieure, et un renfoncement conique (11) disposé au fond de la fente (2), et
- dans lequel l'outil (6) comprend une section supérieure de prise (16) logeant dans la fente (2),
le système étant **caractérisé en ce que**
l'outil comprend une section inférieure de prise (17) constituée pour se prolonger dans le renfoncement conique (11), une surface de contact (30) d'une surface externe de la section inférieure de prise étant en ajustement avec serrage avec le renfoncement conique lorsque la section supérieure de prise (16) est disposée dans la fente (2), la surface de contact (30) présentant une forme correspondant sensiblement à toute inclinaison parmi une pluralité d'inclinaisons angulaires que la surface du renfoncement conique peut présenter au niveau de l'ajustement avec serrage, et de plus la surface de contact comprend une première partie incurvée (32 ; 34, 36) dans une section transversale axiale de l'outil.

15. Système selon la revendication 14, dans lequel, dans une section transversale axiale de la vis, le renfoncement conique (11) présente une partie incurvée ; les dimensions de la tête de vis étant telles que, lorsque la tête de vis est en prise avec l'outil et que la section supérieure de prise de l'outil est placée dans la fente, il s'exerce un ajustement avec serrage entre la partie incurvée de la surface du renfoncement conique et la surface externe de la section inférieure de prise.
